# EUROPEAN PATENT SPECIFICATION

(11) **EP 4 401 355 B1**
(45) Date of publication and mention of the grant of the patent: **01.07.2026**
(21) Application number: 22867295.2
(22) Date of filing: 02.09.2022
(51) Int. Cl.: H04L 9/08, H04L 9/12

(54) **CLOUD KEY MANAGEMENT SERVICE PLATFORM SYSTEM**
CLOUD-SCHLÜSSELVERWALTUNGSDIENSTPLATTFORMSYSTEM
SYSTÈME DE PLATEFORME DE SERVICE DE GESTION DE CLÉS EN NUAGE

(30) Priority: 10.09.2021 JP 2021148022
(43) Date of publication of application: 17.07.2024
(73) Proprietor: Kabushiki Kaisha Toshiba, Tokyo 105-0023 (JP); Toshiba Digital Solutions Corporation, Kawasaki-shi, Kanagawa 212-0013 (JP)
(72) Inventor: NAGASHIMA, Yuki, Kawasaki-shi, Kanagawa 212-0013 (JP); SAWAZAKI, Takeshi, Kawasaki-shi, Kanagawa 212-0013 (JP)
(74) Representative: Marks & Clerk LLP
(86) International application number: PCT/JP2022/033088
(87) International publication number: WO 2023/037973

(56) References cited:
- CN-A- 109 714 155
- CN-A- 113 037 470
- JP-A- 2018 207 348
- US-A1- 2018 351 734
- PIOTR K. TYSOWSKI; XINHUA LING; NORBERT L\"UTKENHAUS; MICHELE MOSCA: "The Engineering of a Scalable Multi-Site Communications System Utilizing Quantum Key Distribution (QKD)", ARXIV.ORG, CORNELL UNIVERSITY LIBRARY, 201 OLIN LIBRARY CORNELL UNIVERSITY ITHACA, NY 14853, 7 December 2017 (2017-12-07), 201 Olin Library Cornell University Ithaca, NY 14853 , XP080845597, DOI: 10.1088/2058-9565/aa9a5d

## Description

### Technical Field

Embodiments described herein relate generally to a cloud key management service platform system.

### Background Art

In recent years, cryptographic communication, in which data is transmitted and received in encrypted form, has been widely executed to prevent data leakage over communication paths. To protect data in cryptographic communication, for example, management of encryption keys that are shared among a plurality of locations is also important. This has led to the emergence of cloud systems that provide encryption key management services via the Internet.

Recently, quantum key distribution (QKD), which enables encryption keys (quantum keys) to be securely shared between two locations by using the principles of quantum mechanics, has been focused. The quantum key distribution is a technology that utilizes the behavior of photons to transmit and receive encryption key information between two locations using photons over optical fibers serving as media. Cryptographic communication between two locations using quantum keys shared between the two locations by quantum key distribution is referred to as quantum cryptographic communication. In the quantum cryptographic communication, key provision application programming interface (API) has been standardized in ETSI (ETSI GS QKD 014).

### Citation List

### Patent Literatures

Patent Literature 1: JP 6609010 B
Patent Literature 2: CN 109714155 A

### Summary of Invention

### Technical Problem

When quantum cryptographic communication is introduced, optical fibers for quantum key distribution need to be installed, i.e., building own facilities for quantum cryptographic communication may be difficult in costs for users. Therefore, there are a number of demands that the encryption key management service including providing the quantum keys should be provided as a cloud service, similarly to the encryption key management services of the existing non-quantum keys.

However, the quantum key distribution is based on sharing of the quantum keys between two locations. In contrast, the cloud system that provides various services including the encryption key management service of the existing non-quantum keys generally forms service areas by one or more data centers in each geographical area to some extent, and provides and manages various services in each of the service areas. Then, in the cloud system, the location that provides and manages various services are represented by a logical assembly of data centers that form the respective service areas. The cloud system may set a multi-tier service area in which a narrow service area is referred to as a lower tier and a wide service area including a plurality of narrow service areas is referred to as an upper tier.

For this reason, the concept of quantum key distribution, i.e., sharing a quantum key between two locations, does not fit in the cloud system where each location is represented by a logical assembly of one or more data centers. Therefore, the encryption key management service of the existing non-quantum keys cannot be simply implanted to the encryption key management service of the quantum keys as one of the cloud services.

The embodiments described herein aim to provide a cloud key management service platform system that provides quantum cryptographic communication services including providing quantum keys on a cloud system.

### Solution to Problem

In general, according to embodiments, a cloud key management service platform system provides, on a cloud system providing various services including a cloud key management service for managing an encryption key which is a non-quantum key, a quantum cryptographic communication service including providing a quantum key by an extended interface conforming to an interface of the cloud key management service. The cloud system includes a plurality of data centers serving as locations for providing the quantum cryptographic communication service, and sets a plurality of service areas each formed of one or more data centers, by the plurality of data centers. Each of the plurality of data centers comprises a quantum key distribution system, a quantum key circulation system, and a key management system. The quantum key distribution system generates a Q key that is a quantum key for quantum cryptographic communication with the other data center directly connected, and shares the Q key with the other data center. The quantum key circulation system transmits and receives a G key that is a quantum key to be provided to a user executing the quantum cryptographic communication, by the quantum cryptographic communication using the Q key with the other data center. The key management system manages the G key in units of service areas. The key management system accepts a request for the G key from the user by the extended interface, and provides the user with the G key obtained from the quantum key circulation system by key provision application programming interface (API) for quantum key. Each data center in a first service area cooperates with the other data center in the first service area to generate a first G key for a user in the first service area executing the quantum cryptographic communication with the other user in the first service area or cooperates with the other data centers in the first service area and a second service area different from the first area to generate a second G key for a user in the first service area executing the quantum cryptographic communication with the other user in the second service area, and provide both users executing the quantum cryptographic communication between any two points in the plurality of service areas with the first G key or the second G key shared between the two points, by the extended interface.

### Brief Description of Drawings

FIG. 1 is a view showing an overview of a cloud key management service platform system (platform system) of an embodiment.
FIG. 2 is a view showing a quantum cryptographic communication system of a first comparative example.
FIG. 3 is a view illustrating envelope encryption used in a second system of a second comparative example.
FIG. 4 is a view showing an overview of a cloud key management service of a cloud system of the second comparative example.
FIG. 5 is a view showing an example of use of the cloud key management service of the cloud system of the second comparative example.
FIG. 6 is a view showing an example of forming a service area by the cloud system of the second comparative example.
FIG. 7 is a view showing an example of applying quantum key distribution to the cloud system in the platform system of the embodiment.
FIG. 8 is a view showing an example of functional blocks of the entire system of the platform system of the embodiment.
FIG. 9 is a view showing an example of functional blocks of a data center of the platform system of the embodiment.
FIG. 10 is a view showing an example of functional blocks of a quantum key delivery system of the platform system of the embodiment.
FIG. 11 is a view showing an example of functional blocks of a quantum key distribution system of the platform system of the embodiment.
FIG. 12 is a flowchart showing an operation flow at the time when use of the quantum cryptographic communication service is started in the platform system of the embodiment.
FIG. 13 is a flowchart showing an operation flow in a case of performing encryption using a quantum key in the platform system of the embodiment.
FIG. 14 is a flowchart showing an operation flow in a case of performing decryption using a quantum key in the platform system of the embodiment.
FIG. 15 is a flowchart showing an operation flow at the time when the use of the quantum cryptographic communication service is terminated in the platform system of the embodiment.
FIG. 16 is a view showing a first use case of the platform system of the embodiment.
FIG. 17 is a view showing a second use case of the platform system of the embodiment.
FIG. 18 is a view showing a third use case of the platform system of the embodiment.

Mode for Carrying Out the Invention Embodiments will be described hereinafter with reference to the accompanying drawings.

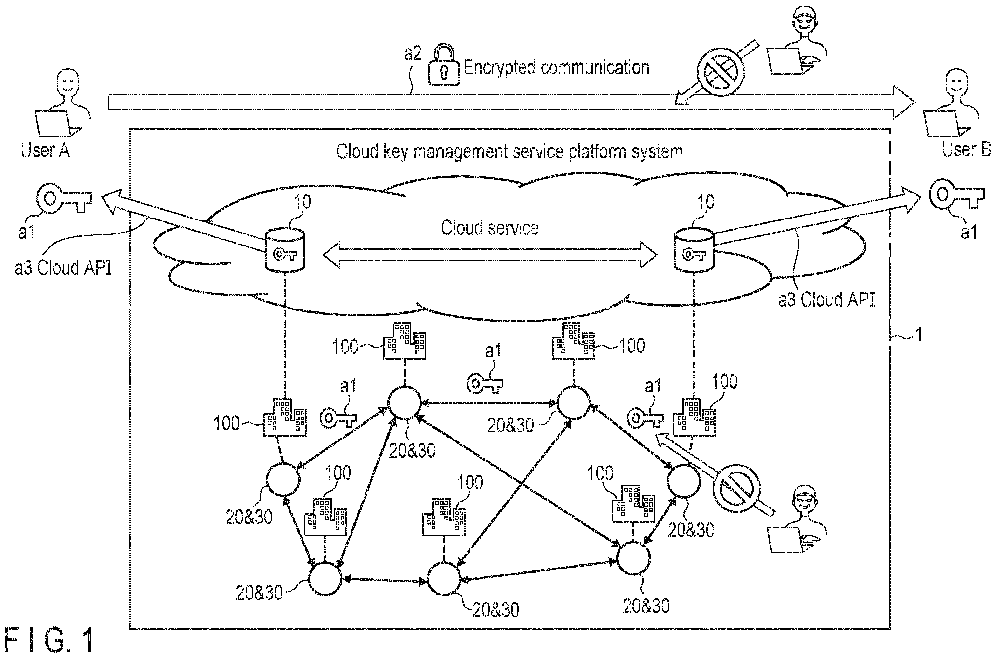

FIG. 1 is a view showing an overview of a cloud key management service platform system 1 of an embodiment. FIG. 1 also shows an image of use of the cloud key management service platform system 1 by users (A and B). In the following descriptions, the cloud key management service platform system 1 may be simply referred to as a platform system 1. The platform system 1 provides quantum cryptographic communication services including provision of quantum keys, on a cloud system that provides various services via the Internet.

In FIG. 1, the user A obtains a quantum key (a1) from the platform system 1, encrypts data with the obtained quantum key, and transmits the data to the user B. In contrast, the user B also obtains a quantum key from the platform system 1 and decrypts the encrypted data. In other words, the user A and the user B are provided with the quantum keys from the platform system 1 and executes the quantum cryptographic communication (a2).

In other words, the platform system 1 provides each of the user A and the user B that execute the quantum cryptographic communication between any two points in the service area of the cloud system with the quantum key to be shared by both of the users as the cloud service.

The cloud system forms a service area by a plurality of data centers 100. Each of the plurality of data centers 100 includes a key management system (KMS: Key Management Service) 10, a quantum key circulation system 20, and a quantum key distribution system 30. The quantum key circulation system 20 and the quantum key distribution system 30 may be hereinafter referred to collectively as a QKD system.

The key management system 10 comprises a function of providing an encryption key management service of quantum keys in addition to the encryption key management service of the existing non-quantum keys. The key management system 10 obtains the quantum key that the user is to share with the communication partner from the quantum key circulation system 20 by means of a key provision API compliant with, for example, ETSI GS QKD 014, and provides the user with the quantum key by means of an extended interface conforming to the interface of the encryption key management service of the existing non-quantum keys. Therefore, the user does not need to have a key provision API for quantum keys, and can obtain quantum keys by an extended interface (a3) that conforms to the existing interface for the encryption key management service of the non-quantum keys. The existing interface and the extended interface will be described below. In the following descriptions, the encryption key management service of the non-quantum keys and the encryption key management service of the quantum keys may be hereinafter referred to collectively as the cloud key management service.

The quantum key circulation system 20 generates the quantum keys to be provided to the users and executes communications to share the quantum keys among the data centers 100 that serve as the users' substantive contact points. More specifically, the quantum key circulation system 20 transmits and receives the quantum key to be supplied to the user, to and from the quantum key circulation system 20 of the adjacent, i.e., directly connected data center 100 (or relay location), by the quantum cryptographic communication. In other words, the quantum keys are transmitted and received between the data centers 100, which are the users' substantive contact points, for example, through the relay of the quantum key circulation system 20 of the plurality of data centers 100 (or relay locations).

The quantum key distribution system 30 generates the quantum keys for the quantum key circulation system 20 to execute the quantum cryptographic communication with the other quantum key circulation system 20. The quantum key distribution system 30 cooperates with the other quantum key distribution system 30 to perform the sharing of the quantum keys for quantum cryptographic communication of the quantum key circulation system 20.

In other words, the platform system 1 implements supplying the quantum keys to be shared by both users, to both the users that execute the quantum cryptographic communication between any two points in the service area of the cloud system by adaptively relaying the quantum keys under water. By executing the quantum cryptographic communication to relay the quantum keys, the protection of the quantum keys is also ensured. In the following descriptions, the quantum key provided to the user may be referred to as a global key (G key), and the quantum key for encrypting the G key may be referred to as a quantum key (Q key).

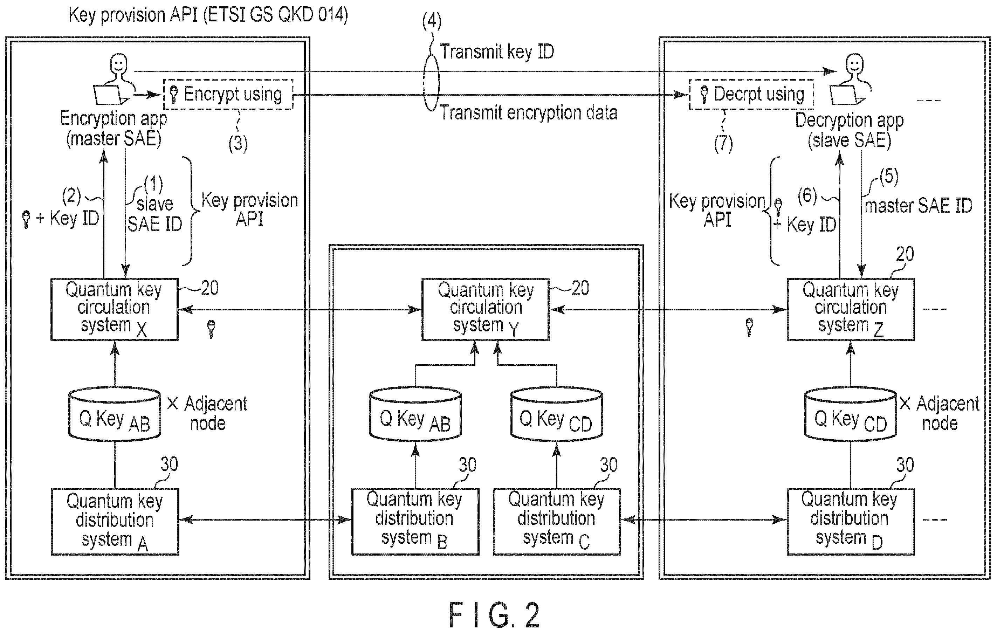

A first comparative example will be described with reference to FIG. 2. The first comparison example is a quantum cryptographic communication system that provides the user with the quantum keys via the key provision API compliant with ETSI GS QKD 014. In FIG. 2, double-line frames indicate locations whose security is physically ensured.

An entity that performs the encryption process of a cryptographic application or the like (master secure application entity [SAE]) transmits a request for the quantum key including as a parameter or the like an identifier (slave SAE ID) of an entity (slave SAE) that performs the decryption process of a decryption application or the like, to the quantum key circulation system (quantum key circulation system _{X}) 20 at its own location, by the key provision API (1). The quantum key circulation system 20 receiving this request transmits the quantum key (G key), and the identifier (key ID) of the quantum key, to the master SAE (2).

The master SAE encrypts the data with the quantum key received from the quantum key circulation system 20 (3), and transmits the encryption data and the key ID of the quantum key used for encryption of the encryption data to the slave SAE (4).

In contrast, the slave SAE transmits a request for the quantum key including as parameters or the like the identifier of the master SAE (master SAE ID) and the key ID received from the master SAE to the quantum key circulation system (quantum key circulation system _{Z}) 20 of the own location, by the key provision API (5). The quantum key circulation system 20 receiving this request transmits the quantum key (G key) indicated by the key ID to the slave SAE (6).

The slave SAE decrypts the encryption data received from the master SAE using the quantum key received from the quantum key circulation system 20 (7).

It is assumed that one relay location intervenes between the location of the master SAE and the location of the slave SAE. The quantum key distribution system (quantum key distribution system _{A}) 30 of the location of the master SAE performs sharing a Q key (Q key _{AB}) with a quantum key distribution system (quantum key distribution system _{B}) 30 at the relay location. In addition, the quantum key distribution system (quantum key distribution system _{D}) 30 of the location of the slave SAE performs sharing a Q key (Q key _{CD}) with a quantum key distribution system (quantum key distribution system _{C}) 30 at the relay location.

The quantum key circulation system (quantum key circulation system _{X}) 20 of the location of the master SAE encrypts the quantum key (G key) provided to the master SAE using the Q key (Q key _{AB}) shared with the relay location, and transmits the quantum key to a quantum key circulation system (quantum key circulation system y) 20 of the relay location. The quantum key circulation system (quantum key circulation system _{X}) 20 of the location of the master SAE recognizes the quantum key circulation system (quantum key circulation system _{Z}) 20 of the location of the slave SAE, based on the slave SAE ID received as the parameter or the like, and then identifies the quantum key circulation system (quantum key circulation system _{Y}) 20 of the relay location as a direct transmission destination of the quantum key (G key).

The quantum key circulation system (quantum key circulation system _{Y}) 20 of the relay location decrypts the quantum key (G key) in the encrypted state, which is received from the quantum key circulation system (quantum key circulation system _{X}) 20 of the location of the master SAE, using the Q key (Q key _{AB}). Then, the quantum key circulation system (quantum key circulation system _{Y}) 20 of the relay location encrypts again the quantum key (G key), using the Q key (Q key _{CD}) shared with the location of the slave SAE, and transmits the quantum key to the quantum key circulation system (quantum key circulation system _{Z}) 20 of the location of the slave SAE. The quantum key circulation system (quantum key circulation system _{Y}) 20 of the relay location recognizes that the quantum key (G key) needs to be transmitted to the quantum key circulation system (quantum key circulation system _{Z}) 20 of the location of the slave SAE, based on destination information of the quantum key (G key), which is set by the quantum key circulation system (quantum key circulation system _{X}) 20 of the location of the master SAE.

The quantum key circulation system (quantum key circulation system _{Z}) 20 of the location of the slave SAE decrypts the quantum key (G key) in the encrypted state, which is received from the quantum key circulation system (quantum key circulation system _{Y}) 20 of the relay location, using the Q key (Q key _{CD}). Then, the quantum key circulation system (quantum key circulation system _{Z}) 20 of the location of the slave SAE supplies to the slave SAE the quantum key (G key) shared with the quantum key circulation system (quantum key circulation system _{X}) 20 of the location of the master SAE, which is indicated by the master SAE ID received as the parameter or the like, i.e., the quantum key (G key) indicated by the key ID received similarly as the parameter or the like.

In the quantum cryptographic communication system to which the key provision API compliant with ETSI GS QKD 014 is applied, according to the first comparative example, the user needs to use an application (encryption application or decryption application) corresponding to the key provision API.

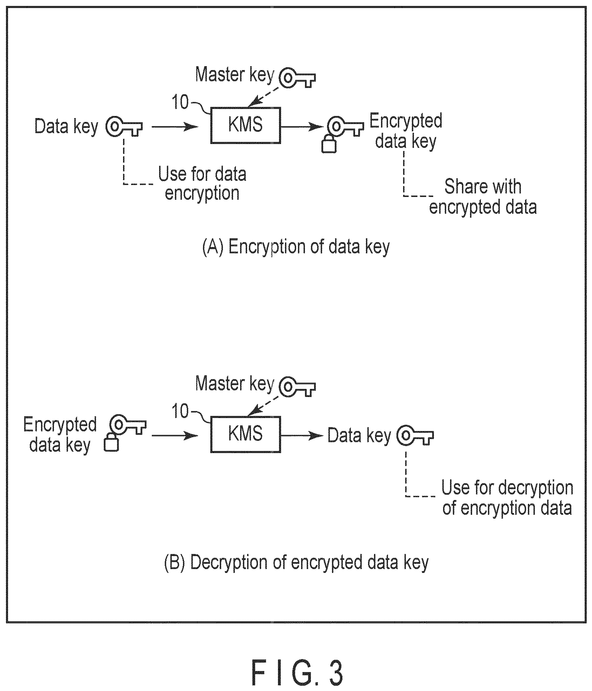

Next, a second comparative example will be described with reference to FIG. 3 through FIG. 5. The second comparative example is a cloud system that provides the encryption key management service (cloud key management service) of the existing non-quantum keys.

In the cloud key management service, sharing the key via the key management system 10 is generally performed using envelope encryption. FIG. 3 is a view illustrating the envelope encryption.

The envelope encryption is to encrypt an encryption key with yet another key. The key used for encryption and decryption of the data is referred to as a data key or the like. In addition, the key used for encryption and decryption of the data key is referred to as a master key or the like. The key management system 10 comprises a function of storing and managing the master key. The key management system 10 does not store and manage the data key that is encrypted by the master key.

FIG. 3(A) shows an overview of data key encryption in the key management system 10 that uses the envelope encryption.

For example, the key management system 10 encrypts the data key used for data encryption with a master key, in response to a request from the transmitting side user of the transmitting side user and the receiving side user who perform the cryptographic communication. For example, the transmitting side user and the receiving side user who perform the cryptographic communication share the data key (encrypted data key) encrypted by the key management system 10 with the data encrypted by the data key. Incidentally, sharing the data by the transmitting side user and the receiving side user is not limited to the cryptographic communication but, for example, the data may be exchanged via a storage device.

FIG. 3(B) shows an overview of decryption of the encrypted data key in the key management system 10 that uses the envelope encryption.

For example, the key management system 10 decrypts the encrypted data key with the master key, in response to a request from the receiving side user of the transmitting side user and the receiving side user who perform the cryptographic communication. The receiving side user uses the data key decrypted by the key management system 10 to decrypt the data (encryption data) encrypted by the data key.

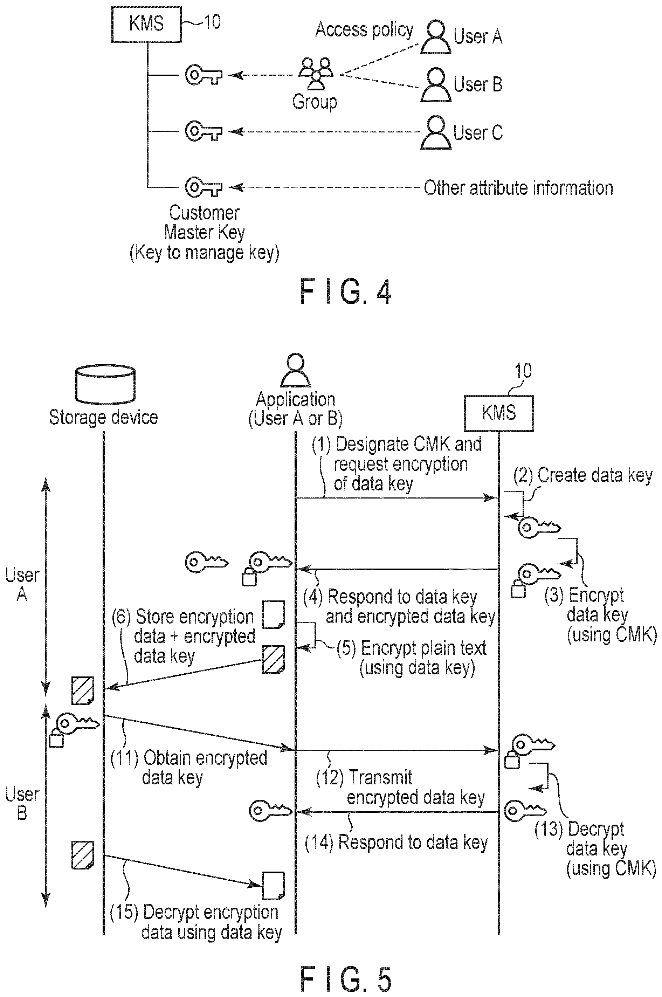

FIG. 4 is a view showing an overview of the cloud key management service provided by the key management system 10 that uses the envelope encryption.

In managing the master key (CMS: customer master key), the key management system 10 sets an access policy for each master key. For example, this access policy may grant an access authority to a user belonging to a specific group or grant an access authority to a specific user. Alternatively, the access policy may grant an access authority to a user having a specific attribute.

For example, if the access policy of a certain master key grants an access authority to a user belonging to a certain group, each user belonging to the group can securely share the data with other users belonging to the group via the master key.

FIG. 5 is a view showing a usage example of the cloud key management service provided by the key management system 10 that uses the envelope encryption. It is assumed that the user A and the user B having an access authority to a certain master key share the data via a storage device.

For example, the user A specifies the master key (CMK) to which the user has an access authority, for the key management system 10, and requests encryption of the data key (1). The key management system 10 receiving this request generates the data key (2) and encrypts the data key with the specified master key (3). Then, the key management system 10 provides the data key and the encrypted data key to the user A (4). As described above, the key management system 10 does not store or manage the data keys.

The user A encrypts data (plain text) to be shared with the user B using the data key received from the key management system 10 (5), and the user A stores the encryption data and the encrypted data key in the storage device (6).

In contrast, the user B obtains the encrypted data key from the storage device (11) and transmits the data key to the key management system 10 (12). The key management system 10 decrypts the encrypted data key using the master key to which the user B has an access authority (13) and provides the user B with the obtained data key (14).

The user B decrypts the encryption data stored in the storage device using the data key received from the key management system 10(15).

Since the encrypted data key stored in the storage device can be decrypted by the only user having the access authority for the master key used to encrypt the encrypted data key, and since the data key does not exist in the key management system 10, secure sharing of the data between the users having the access authority of the master key is implemented.

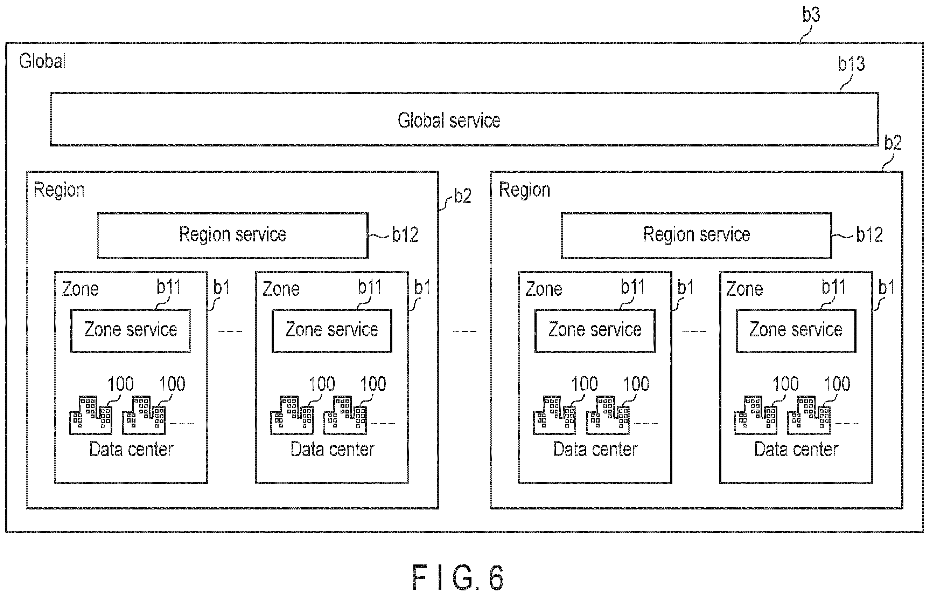

In addition, FIG. 6 is a view showing an example of forming a service area by the cloud system that provides various services including the cloud key management service.

The cloud system sets, for example, a multi-tier service area such as zones b1, regions b2, and a global b3. The zones b1 are formed by one or more data centers 100, which serve as locations providing various services, and zone services b11 are provided by one or more data centers 100 that form the zones b1.

The regions b2 are upper-tier service areas of the zones b1, including a plurality of zones b1. In the region b2, a region service b12 is provided by a plurality of data centers 100 under the region b2. Furthermore, the global b3 is a higher-tier service area of the regions b2, including the plurality of regions b2. In the global b3, a global service b13 is provided by a plurality of data centers 100 under the global b3.

In other words, in the cloud system, the locations providing the zone services b11, the region services b12, and the global service b13 are represented as the zones b1, the regions b2, and the global b3, which are logical assemblies of the data centers 100. For example, providing the zone service b11 in the zone b1 is realistically performed under one of the data centers 100 under the zone b1, but the location is abstracted as the first zone. The region service b12 and the global service b13 are provided in the same manner.

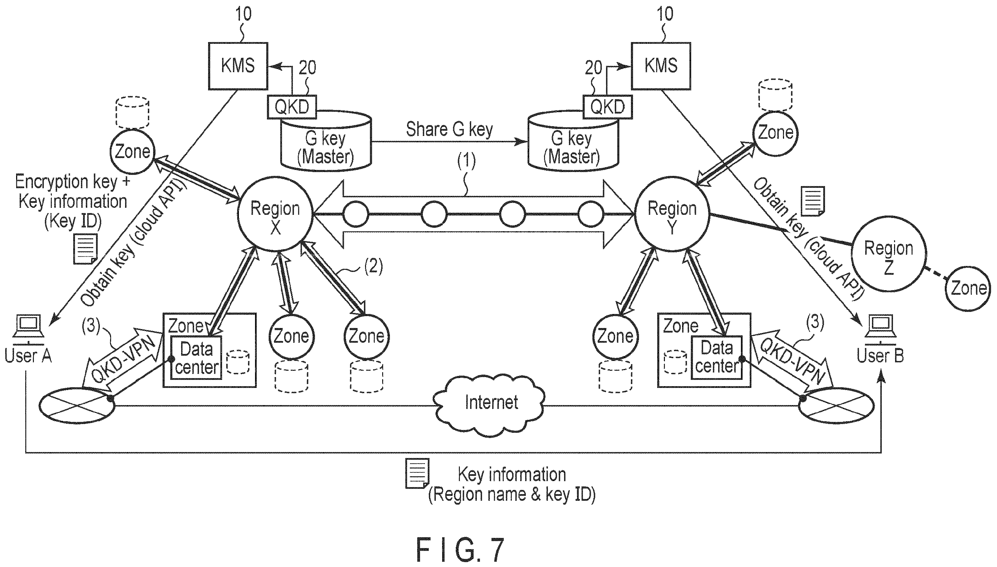

Next, an example that the platform system 1 of the embodiment applies the quantum key distribution of sharing the quantum key between two locations, to the cloud system represented as the logical assembly of the data center which the service providing location forms in each service, based on the first comparative example and the second comparative example described above, will be described with reference to FIG. 7.

In the platform system 1 of the embodiment, the smallest unit that shares the G key is referred to as the region b2. The platform system 1 maps on the cloud system three types of quantum key distribution, i.e., (1) quantum key distribution for sharing the G keys among the regions b2, (2) quantum key distribution for G key replication among the data centers 100 under each region b2, and (3) quantum key distribution for exchanging the G keys between users and the data centers 100 under the regions b2 to which the users belong.

The G key replication in (2) is a process in which the data centers 100 in each region b2 cooperate to keep consistency of the G keys. The G keys shared between the first region b2 and the second region b2 can be allocated without duplication and supplied to, for example, each of a plurality of sets of users that perform the quantum cryptographic communication in parallel between the first region b2 and the second region b2, by pooling of the G keys in the service area by this G key replication. In addition, sharing the G keys between the two regions b2 can be adaptively performed in accordance with the amount of demand that changes from time to time, by the G key replication.

In the quantum key distribution in (3), the user needs to install optical fibers between the user and a certain data center 100 but, when the user performs the quantum key distribution between the user and a number of other users, the optical fiber needs only to be installed between the user and one data center 100 while the optical fibers need to be essentially installed between the user and each of the other users. For example, if a company having N locations is to build its own facilities for performing the quantum key distribution between the N locations, the optical fibers need to installed between all of (N x (N-1)/2) combinations of two locations, but only N optical fibers need to be installed from each location to the data center 100.

By mapping the above three types of quantum key distribution onto the cloud system, the platform system 1 of the embodiment can provide the quantum keys to be shared by both users, to each of both the users that perform the quantum cryptographic communication at any two locations, from the data center 100 under the region b2 to which each of the users belongs.

Furthermore, the platform system 1 of the embodiment adopts an extended interface conforming to an existing interface such as specifying the master key in the envelope encryption, as the interface for the user to receive the quantum key from the region b2 to which the user belongs (more specifically, one of the data centers 100 under the region b2). Examples of the extended interfaces include the diversion or addition of parameters, and the like.

More specifically, the key management system 10 applies, for example, the information exchanged in the key provision API compliant with ETSI GS QKD 014, to the information exchanged in the interface for the envelope encryption. The key management system 10 internally performs converting the interface for the envelope encryption between the system and the user into, for example, the key provision API compliant with ETSI GS QKD 014 between the system and the quantum key circulation system 20, and converting, for example, the key provision API compliant with ETSI GS QKD 014 between the system and the quantum key circulation system 20 into an interface for the envelope encryption between the system and the user.

By adopting this extended interface, the user can obtain the quantum keys in the same sense as the encryption key management service of the existing non-quantum keys, and can make it unnecessary for the user to obtain, for example, the key provision API compliant with ETSI GS QKD 014 for obtaining the quantum keys from the quantum key circulation system 20, and the like.

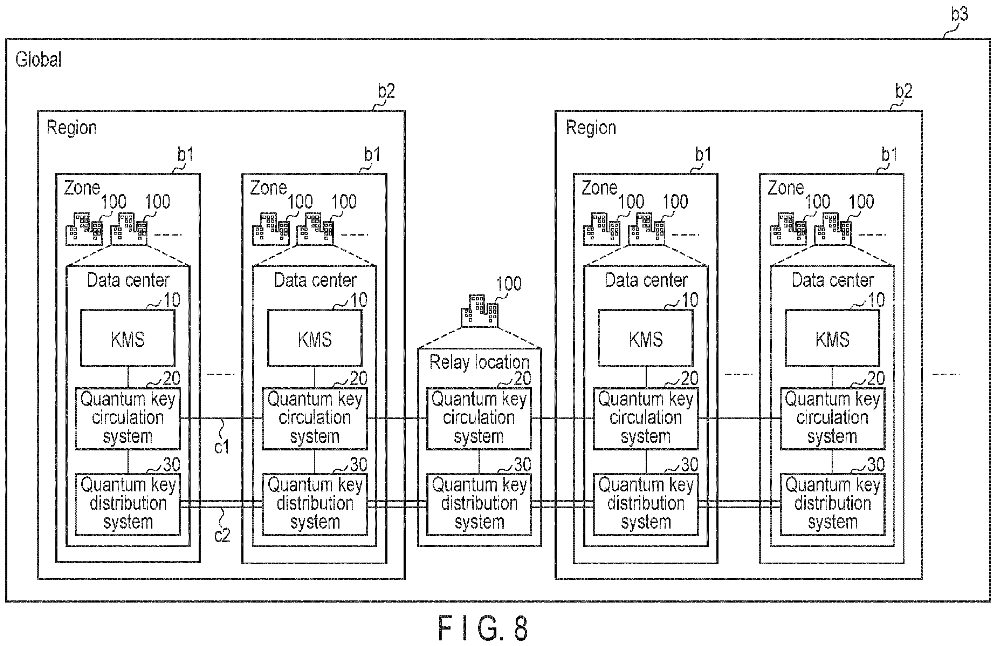

FIG. 8 is a view showing an example of functional blocks of the entire system of the platform system 1 of the embodiment.

As described above, the cloud system sets the multi-tier service area such as the zones b1, the regions b2, and the global b3. Each zone b1 is formed by one or more data centers 100. Each region b2 is formed by a plurality of zones b1. The platform system 1 uses this region b2 as the minimum unit for sharing the G keys. For this purpose, in the platform system 1, one or more relay locations for the quantum cryptographic communication are provided between two regions b2. The relay location includes the quantum key circulation system 20 and the quantum key distribution system 30. The quantum cryptographic communication between regions b2 in a short distance can be executed directly without providing a relay location.

In addition, as described above, each data center 100 includes the key management system 10, the quantum key circulation system 20, and the quantum key distribution system 30. The quantum key circulation system 20 of each data center 100 is connected to the quantum key circulation system 20 of the other adjacent data center 100 in the same zone b1 by a classical communication network (c1). The classical communication network is a communication network for transmitting and receiving general data that is not specialized for encryption key information by photons. The quantum key distribution system 30 of each data center 100 is connected to the quantum key distribution system 30 of the other adjacent data center 100 in the same zone b1 by a quantum communication network (c2). The quantum communication network is a communication network for transmitting and receiving the quantum key information by photons.

In addition, the quantum key circulation systems 20 and the quantum key distribution systems 30 of several data centers 100 in each zone b1 are connected to the quantum key circulation systems 20 and the quantum key distribution systems 30 of the data centers 100 in the other zones b1 in the same region b2.

Furthermore, the quantum key circulation systems 20 and quantum key distribution systems 30 of several data centers 100 of each region b2 are connected to the quantum circulation system 20 and quantum key distribution system 30 of the relay location which intervenes between the region and the other region b2.

In other words, the platform system 1 of the embodiment includes communication networks (c1 and c2) that allows the G key replication to be performed in the region b2 and allows the G keys to be shared between the regions b2.

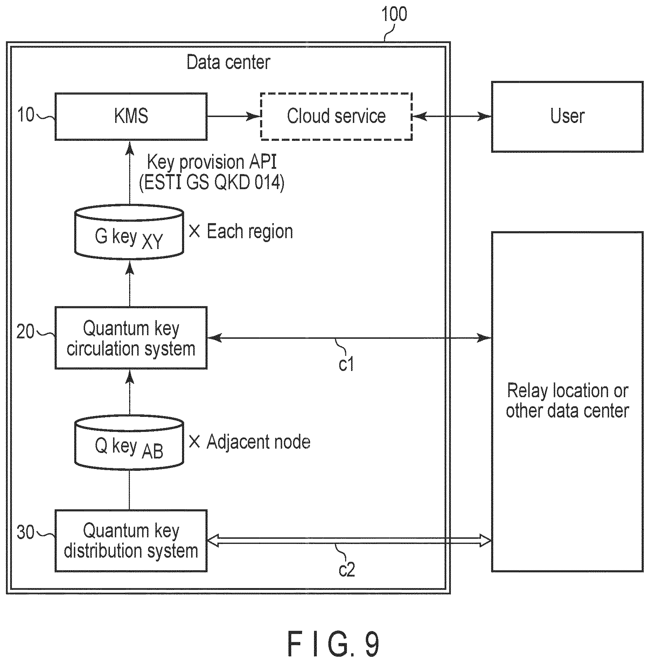

FIG. 9 is a view showing an example of a functional block of the data center 100. Similarly to FIG. 2, the double-line frame represents a location where security is physically ensured.

As described above, the data center 100 includes the key management system 10, the quantum key circulation system 20, and the quantum key distribution system 30.

For example, it is assumed that a certain data center 100 is connected to N other data centers (adjacent nodes) 100. The adjacent nodes may include not only other data centers 100 in the same zone b1, but also data centers 100 in the other zones b1 in the same region b2, and relay locations which intervene between the region and the other regions b2.

The quantum key distribution system 30 cooperates with each of quantum key distribution systems 30 of N adjacent nodes to generate the Q key that is shared between the system and each of the adjacent nodes. In other words, the Q keys for the adjacent nodes are stored in the data center 100.

The quantum key circulation system 20 receives the Q key supplied from the quantum key distribution system 30 and performs the quantum cryptographic communication to transmit and receive the G keys between the system and the quantum key circulation systems 20 of the adjacent nodes. More specifically, the quantum key circulation system 20 encrypts the G key with the Q key and transmits the G key, or receives the G key in the encrypted state and decrypts the G key with the Q key. The transmission and reception of the G keys by the quantum key circulation system 20 can be performed for sharing of the G keys between different regions b2 or for the G key replication in the same region b2.

As described above, in the platform system 1, the smallest unit of sharing the G key is referred to as the region b2. The G keys for each region b2 (including the own region b2), i.e., the G keys to be provided to users who perform the quantum cryptographic communication with other users belonging to the same region b2, and the G keys to be provided to users who perform the quantum cryptographic communication with other users belonging to different regions b2, are stored in each of the regions b2. It does not matter how the G keys stored in each of the regions b2 are held by the plurality of data centers 100 in each of the regions b2 as long as consistency is maintained. For example, each data center 100 may hold all (duplicates), or the keys may be distributed and held in the data centers 100. The method of the G key replication to keep the consistency is not limited to a specific method, but a variety of methods may be applied.

For example, the key management system 10 accepts a request for the G key from a user who performs the quantum cryptographic communication with the other user belonging to a certain region b2, by an extended interface compliant with the interface of the encryption key management service of the existing non-quantum keys, obtains the G key shared with the certain region b2 from the quantum key circulation system 20 by, for example, the key provision API compliant with ETSI GS QKD 014, and supplies the G key to the user. In other words, the key management system 10 provides the service of providing the quantum keys as the cloud service. The transmission and reception of the G key to and from the user is also performed by the quantum cryptographic communication, but description of the quantum cryptographic communication with the user will be omitted here. Incidentally, the key management system 10 also continues to provide the encryption key management service of the existing non-quantum keys. Therefore, the user can select a cryptographic communication method according to, for example, the confidentiality level of the data.

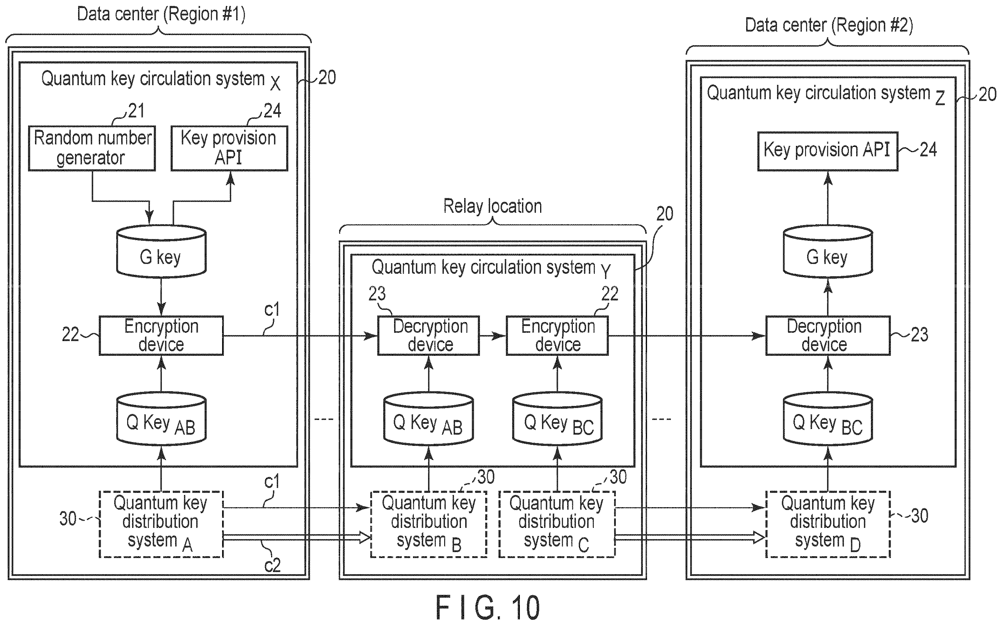

FIG. 10 is a view showing an example of a functional block of the quantum key circulation system 20. In this example, too, double-line frames indicate locations whose security is physically ensured.

The quantum key circulation system 20 includes a random number generator 21, an encryption device 22, a decryption device 23, and a key provision API 24. The decryption device 23 is not shown in the quantum key circulation system 20 on a data center (region #1) 100 side while the random number generator 21 and the encryption device 22 are not shown in the quantum key circulation system 20 on a data center (region #2) 100 side. These are not shown to make description easily understood.

For example, the random number generator 21 of the quantum key distribution system (quantum key circulation system _{X}) 20 operating in the data center 100 of the region (#1) b2 generates the G keys to be shared with the data center 100 of the region (#2) b2. The encryption device 22 receives from the quantum key distribution system 30 the supply of a Q key (Q key _{AB}) to be shared with the relay location which intervenes between the data center 100 in the region (#1) b2 and the data center 100 in the region (#1) b2, and encrypts the G key with the Q key (Q key _{AB}). The quantum key circulation system 20 transmits the encrypted G key to the quantum key circulation system (quantum key circulation system y) 20 of the relay location.

In contrast, in the quantum key circulation system (quantum key circulation system _{Y}) 20 of the relay location, the decryption device 23 receives the Q key (Q key _{AB}) to be shared with the data center 100 of the region (#1) b2, from the quantum key distribution system 30, and once decrypts the encrypted G key with the Q key (Q key _{AB}). Then, the cryptographic device 22 receives the supply of the Q key (Q key _{BC}) to be shared with the data center 100 in the region (#2) b2, from the quantum key distribution system 30, and re-encrypts the G key with the Q key (Q key _{BC}). The quantum key circulation system 20 transmits the re-encrypted G key to the quantum key circulation system (quantum key circulation system _{Z}) 20 of the data center 100 in the region (#2) b2.

In the quantum key circulation system (quantum key circulation system _{Z}) 20 operating in the data center 100 of the region (#2) b2, the decryption device 23 receives a Q key (Q key _{BC}) to be shared with the relay location, from the quantum key distribution system 30, and decrypts the encrypted G key with the Q key (Q key _{BC}).

Then, the key provision APIs 24 of the quantum key circulation system (quantum key circulation system _{X}) 20 and the quantum key circulation system (quantum key circulation system _{X}) 20 provide the G key shared by the above procedure to the key management system 10 in response to, for example, a request from the key management system 10 by the key provision API compliant with ETSI GS QKD 014.

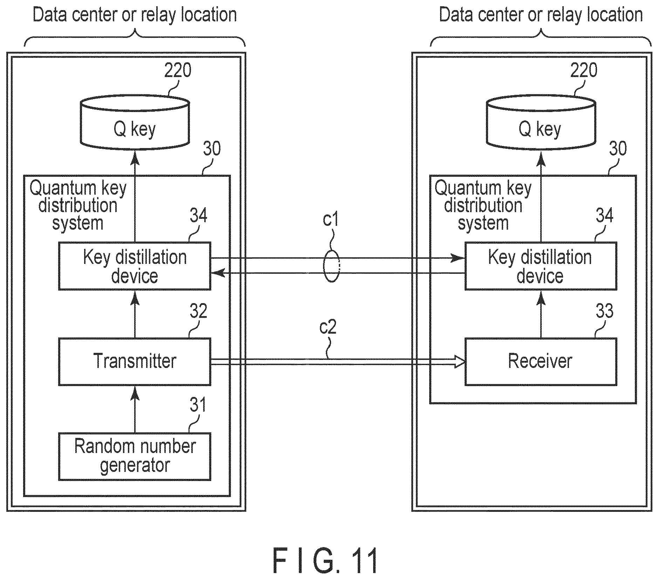

FIG. 11 is a view showing an example of a functional block of the quantum key distribution system 30. In this example, too, double-line frames indicate locations whose security is physically ensured.

The quantum key distribution system 30 includes the random number generator 31, a transmitter 32, a receiver 33, and a key distillation device 34. The receiver 33 is not shown in the quantum key distribution system 30 on the left side while the random number generator 31 and the transmitter 32 are not shown in the quantum key distribution system 30 on the right side, but these are not shown to make description easily understood.

The random number generator 31 generates a random number sequence (encryption key information) to be transmitted to and received from the quantum key delivery system 30 in the other data center 100 or relay location. The transmitter 32 transmits the random number sequence generated by the random number generator 31 to the quantum key distribution system 30 in the other data center 100 or relay location via the quantum communication network (c2). In contrast, the receiver 33 receives the random number sequence transmitted from the quantum key distribution system 30 at the other data center 100 or relay location via the quantum communication network (c2).

The key distillation device 34 performs a confidentiality enhancement process to remove a part which may be wiretapped from the random number sequence by cooperation with the transmitter side and the receiver side of the random number sequence. The random number sequence from which the inappropriate part of the random number sequence transmitted and received between the transmitter side and the receiver side is removed by the key distillation device 34 is stored on both sides as the Q key to be shared between the transmitter side and the receiver side.

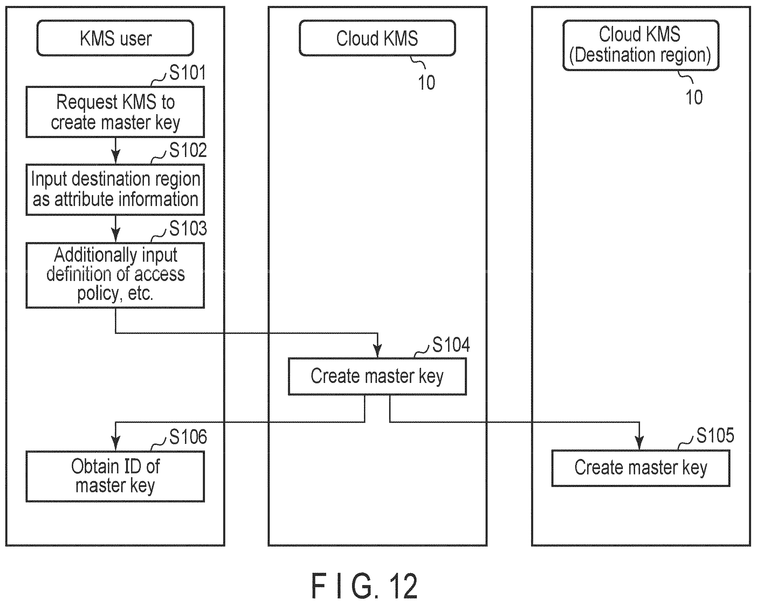

FIG. 12 is a flowchart showing a flow of operations in a case where the user starts using the quantum cryptographic communication service including providing the quantum keys, in the platform system 1 of the embodiment. In FIG. 12, "cloud KMS" is a logical assembly of key management systems 10 of the plurality of data centers 100 in a certain region b2. In other words, the entity of the "cloud KMS" is distributed among the plurality of data centers 100 in a certain region b2.

The user who starts using the quantum cryptographic communication service requests the key management system 10 of the region b2 to which the user belongs (more specifically, any of the data centers 100 under the region b2) to create a master key (S101). At this time, the user inputs a destination region b2 as attribute information (S102). The destination region b2 is the region b2 to which the communication partner belongs. Furthermore, the user inputs a definition of an access policy, and the like for the master key as needed (S103).

In contrast, the key management system 10 of the region b2, which receives the request from the user, creates a master key based on the information input by the user (S104). The key management system 10 of the region b2 instructs the key management system 10 of the destination region b2 to create the same master key. The key management system 10 of the destination region b2, which receives the instruction, creates the same master key (S105). The key management system 10 of the region b2 transmits ID of the created master key to the user (S106).

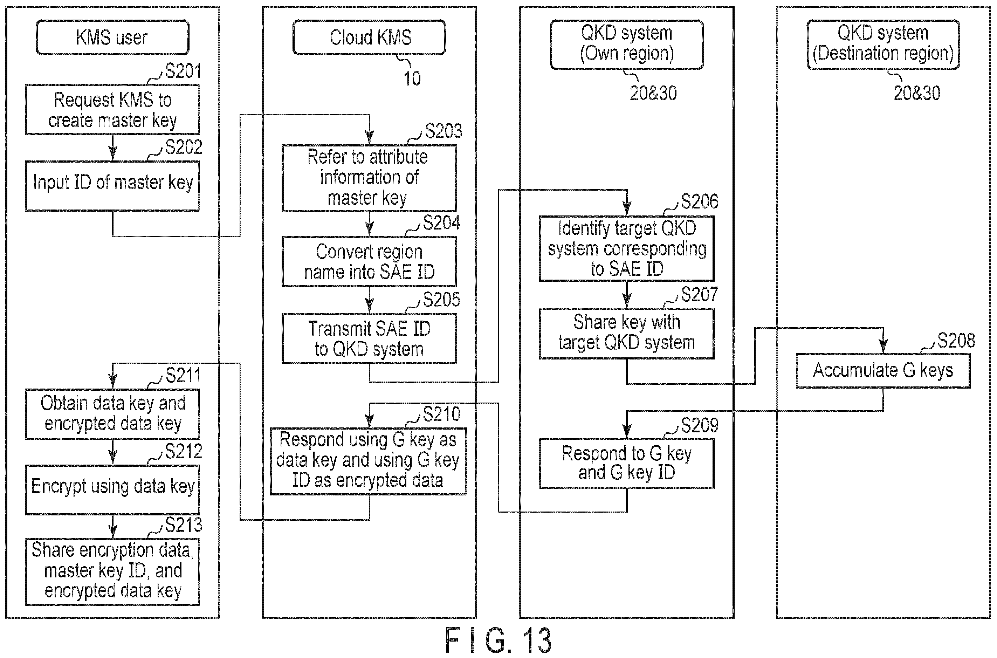

FIG. 13 is a flowchart showing a flow of operations in a case where the user performs encryption using the quantum key in the platform system 1 of the embodiment. In FIG. 13, "cloud KMS" is the same as the "cloud KMS" described above. In addition, "QKD system" in FIG. 13 is a logical assembly of QKD systems (quantum key circulation system 20 and quantum key distribution system 30) of the plurality of data centers 100 in a certain region b2. In other words, the entity of the "QKD System" is distributed among the plurality of data centers 100 in a certain region b2.

The user requests a data key to be used for data encryption from the key management system 10 of the region b2 to which the user belongs (more specifically, any of the data centers 100 under the region b2) (S201). At this time, the user inputs the master key ID obtained at the time of starting use of the quantum cryptographic communication service (S202). The input of the master key ID conforms to the interface of the encryption key management service of the existing non-quantum keys.

The key management system 10 refers to the attribute information of the master key indicated by the master key ID, i.e., the destination region, based on the master key ID received from the user (S203). The key management system 10 converts the destination region name into, for example, SAE ID used in the key provision API compliant with ETSI GS QKD 014 (S204), and transmits the SAE ID to the QKD system (quantum key circulation system 20 and quantum key distribution system 30) of the own region b2 (more specifically, the own data center 100) (S205).

The QKD system identifies a target QKD system corresponding to the received SAE ID (S206) and performs key sharing with the target QKD system (S207). As a result, the QKD system in the destination region accumulates the G keys shared with the QKD system in the region b2 to which the user belongs (S208). The accumulation of the G keys is also performed in the QKD system of the own region. In addition, since the quantum key cryptography by users in the two regions can be performed in parallel, the G key replication is performed in each of the regions. The QKD system (QKD system of the own region b2) transmits the G key shared with the QKD system in the destination region and the ID of the G key to the key management system 10 (S209).

The key management system 10 uses the G key received from the QKD system as the data key and uses the G key ID also received from the QKD system as the encrypted data key to transmit the G key and the G key ID to the user (S210). The transmission of the G key and the G key ID also conforms to the interface of the encryption key management service of the existing non-quantum keys.

When obtaining the data key (G key) and the encrypted data key (G key ID) from the key management system 10 (S211), the user encrypts the data using the data key (S212) and shares the encryption data, the master key ID, and the encrypted data key with the other user (for example, the partner of the quantum cryptographic communication) (S213).

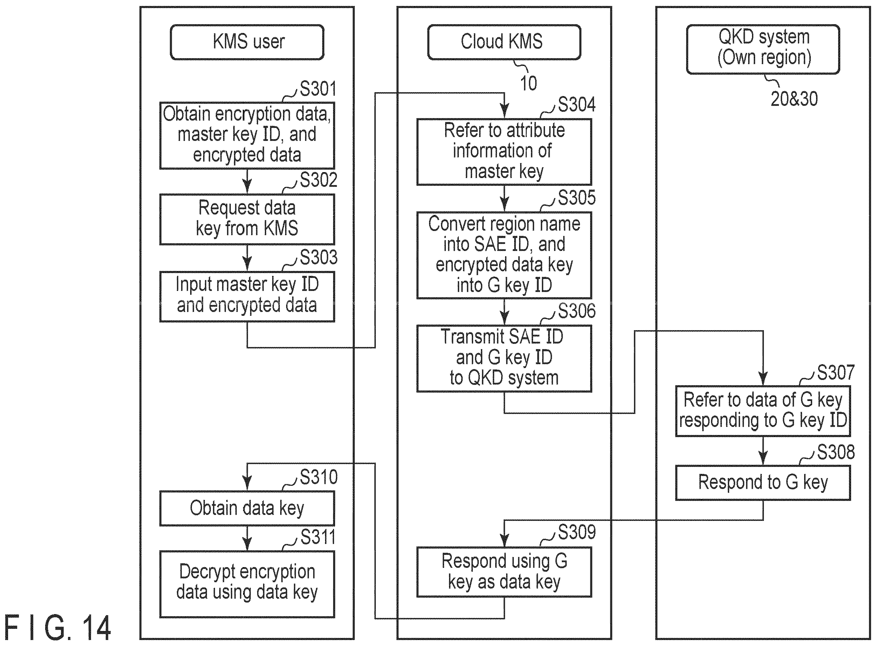

FIG. 14 is a flowchart showing a flow of operations in a case where the user decrypts the encryption data using the quantum key in the platform system 1 of the embodiment. In FIG. 14, "cloud KMS" and "QKD system" are the same as the "cloud KMS" and "QKD system" described above.

The user obtains the encryption data, the master key ID, and the encrypted data key from the other user (for example, the partner of the quantum cryptographic communication) (S301). The user requests a data key for decrypting the encryption data from the key management system 10 of the region b2 to which the user belongs (more specifically, any of the data centers 100 under the region b2) (S302). At this time, the user inputs the master key ID and the encryption data key obtained with the encrypted data (S303). This input of the master key ID can be handled by adding a parameter to the interface of the encryption key management service of the existing non-quantum keys.

The key management system 10 refers to the attribute information of the master key indicated by the master key ID, i.e., the destination region, based on the master key ID received from the user (S304). The key management system 10 converts the destination region name into, for example, SAE ID used in the key provision API compliant with ETSI GS QKD 014, and converts the encrypted data key received from the user into G key ID (S305). The key management system 10 transmits the converted SAE ID and the G key ID to the QKD system in the own region b2 (more specifically, the own data center 100) (S306).

The QKD system refers to the G key data corresponding to the G key ID received from the key management system 10 (S307) and transmits the G key to the key management system 10 (S308). The key management system 10 transmits the G key received from the QKD system to the user as a data key (S309). The transmission of the G key as the data key conforms to the interface of the encryption key management service of the existing non-quantum keys.

When inputting the data key (G key) from the key management system 10 (S310), the user decrypts the encryption data using the data key (S311).

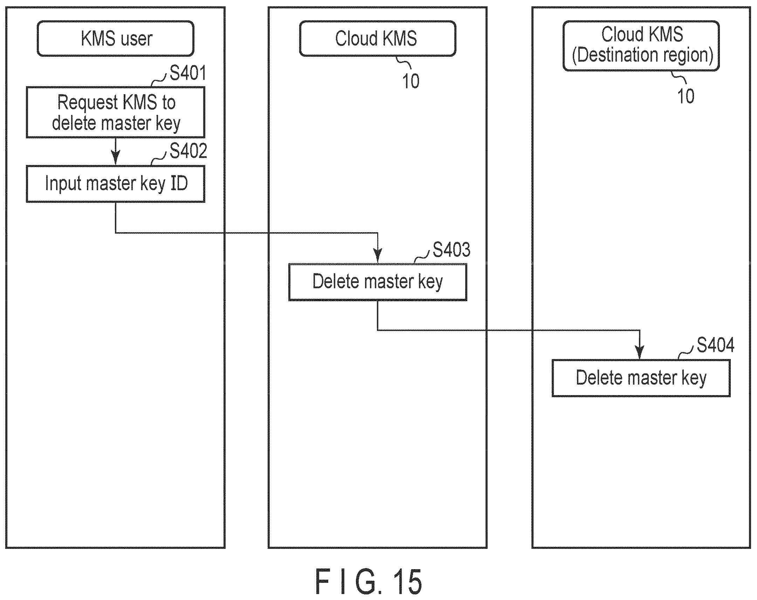

FIG. 15 is a flowchart showing a flow of operations in a case where the user ends using the quantum cryptographic communication service including providing the quantum keys, in the platform system 1 of the embodiment. In FIG. 15, "cloud KMS" is the same as the "cloud KMS" described above.

The user who ends using the quantum cryptographic communication service requests the key management system 10 of the region b2 to which the user belongs (more specifically, any of the data centers 100 under the region b2) to delete the master key (S401). At this time, the user obtains the master key ID (S402).

In contrast, the key management system 10 of the region b2, which has accepted the request from the user, deletes the master key indicated by the master key ID (S403). The key management system 10 of the region b2 instructs the key management system 10 of the destination region b2, which is indicated by the attribute information accompanying the master key, to delete the same master key. The key management system 10 of the destination region b2, which receives this instruction, deletes the same master key (S405).

As described above, the platform system 1 of the embodiment can provide on the cloud system the quantum cryptographic communication service including providing the quantum key which can be used in the same manner as the encryption key management service of the existing non-quantum keys, by mapping on the cloud system three types of quantum key distribution, i.e., (1) quantum key distribution for sharing the G keys among the regions b2, (2) quantum key distribution for G key replication among the data centers 100 under each region b2, and (3) quantum key distribution for exchanging the G keys between users and the data centers 100 under the regions b2 to which the users belong, and by internally performing, for example, conversion for applying the information exchanged in the key provision API conforming to ETSI GS QKD 014 to the information exchanged by the interface for the envelope encryption.

Next, several use cases that can be conceived from the platform system 1 of the embodiment will be described.

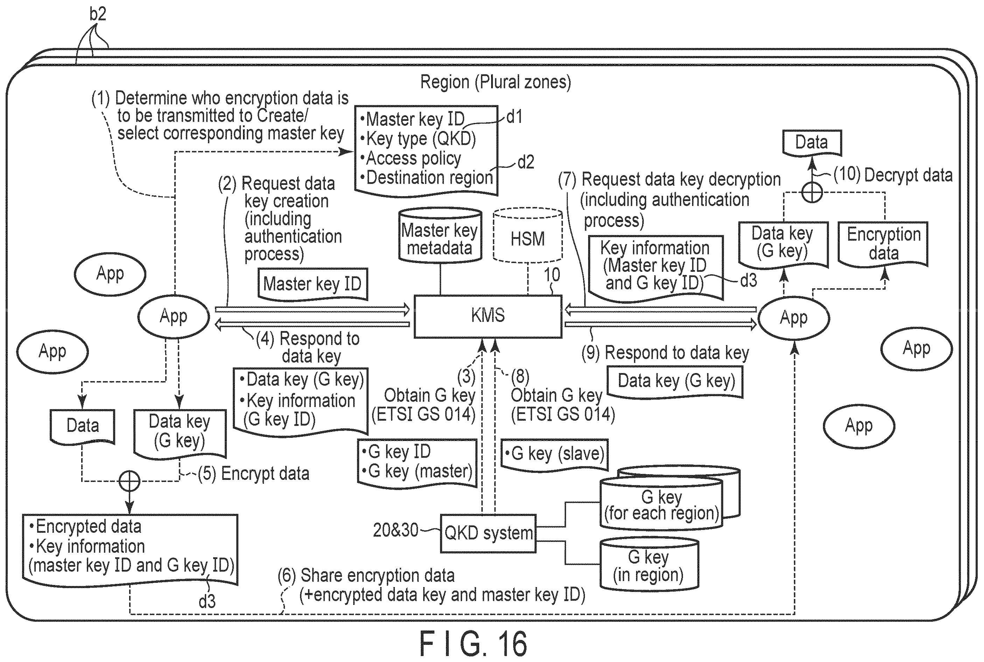

FIG. 16 shows a first use case of the platform system 1 of the embodiment. The first use case is a case where applications (Apps) in the cloud of the same region b2 obtain quantum keys shared by the key management system 10. This case corresponds to, for example, a case of providing the user with not only the quantum key, but also the facilities for communication (quantum cryptographic communication) using the quantum key.

The application on the transmitting side determines to whom the encryption data is to be transmitted, and requests the key management system 10 to create a master key corresponding to the partner (1). Alternatively, when the master key has already been created, the application selects the master key corresponding to the partner. When creating the master key, the application inputs the key type (d1), the access policy, the destination region (d2), and the like. The key type (d1) and the destination region (d2) are extended parts from the existing interface. The key type is, for example, information indicating whether the key is a quantum key or not. The destination region is input when the information (QKD) indicating the quantum key is input. Information on the master key is managed as, for example, master key metadata by the key management system 10.

When creating or selecting the master key corresponding to the partner to whom the encryption data is to be transmitted, the application on the transmitting side specifies the master key ID and requests the key management system 10 to create a data key (2). At this time, the key management system 10 executes an application authentication process, based on the access policy, and the like which are input when the master key is created.

The key management system 10 obtains the G key shared with the destination region (in this case, in the same region) from the QKD system (quantum key circulation system 20 and quantum key distribution system 30) by, for example, the key provision API compliant with ETSI GS QKD 014 (3). The key management system 10 transmits the G key and the G key ID to the application, using the obtained G key as the data key and using its G key ID as key information (4).

The application on the transmitting side encrypts the data using the G key supplied from the key management system 10 and obtains the encrypted data, and the key information including the master key ID and the G key ID (d3) (5). The G key ID (d3) in the key information is an extended part from the existing interface. The application on the transmitting side transmits the encryption data (encrypted data), the encrypted data key (G key ID), and the master key ID to the application on the receiving side, and shares them with the application on the receiving side (6).

In contrast, the application on the receiving side specifies the key information (master key ID and G key ID (d3)) received from the application on the transmitting side and requests the key management system 10 to decrypt the data key (7). As described above, the G key ID (d3) in the key information is an extended part from the existing interface. At this time, the key management system 10 executes an application authentication process, based on the access policy, and the like which are input when the master key is created.

The key management system 10 obtains the G key shared with the region to which the application on the transmitting side belongs (in this case, in the same region) from the QKD system by, for example, the key provision API compliant with ETSI GS QKD 014 (8). The key management system 10 transmits the obtained G key to the application as a data key (9). The application on the receiving side decrypts the encryption data using the G key supplied from the key management system 10 (10).

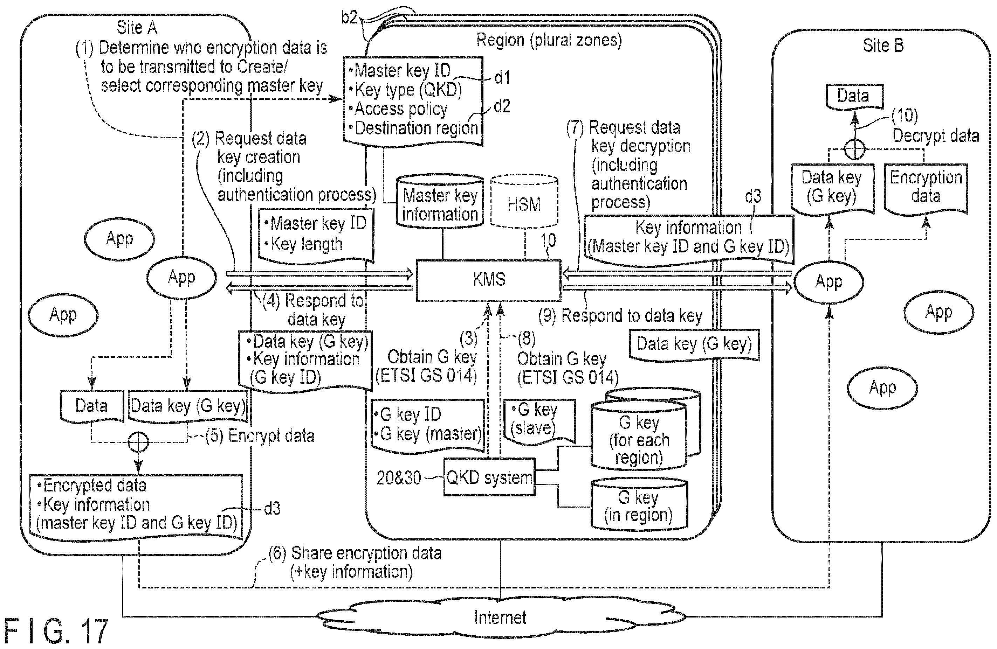

FIG. 17 shows a second use case of the platform system 1 of the embodiment. The second use case is a case in which users (applications) at on-premises sites A and B, which perform the quantum key communication, obtain quantum keys shared by the key management system 10 from the same region b2.

The application at site A determines to whom the encryption data is to be transmitted, and requests the key management system 10 to create a master key corresponding to the partner (1). Alternatively, when the master key has already been created, the application selects the master key corresponding to the partner. When creating the master key, the application inputs the key type (d1), the access policy, the destination region (d2), and the like. As described above, the key type (d1) and the destination region (d2) are extended parts from the existing interface.

When creating or selecting the master key corresponding to the partner to whom the encryption data is to be transmitted, the application at site A specifies the master key ID and a length of the key and requests the key management system 10 to create a data key (2). The key length is an option in a case of requesting, for example, a data key having a length different from a specified value. In addition, at this time, the key management system 10 executes the application authentication process, based on the access policy, and the like which are input when the master key is created.

The key management system 10 obtains the G key shared with the destination region (in this case, in the same region) from the QKD system (quantum key circulation system 20 and quantum key distribution system 30) by, for example, the key provision API compliant with ETSI GS QKD 014 (3). The key management system 10 transmits the G key and the G key ID to the application at site A, using the obtained G key as the data key and using its G key ID as key information (4).

The application at site A encrypts the data using the G key supplied from the key management system 10 and obtains the encrypted data, and the key information including the master key ID and the G key ID (d3) (5). As described above, the G key ID (d3) in the key information is an extended part from the existing interface. The application at site A transmits the encryption data (encrypted data), the encrypted data key (G key ID), and the master key ID to the application at site B, and shares them with the application at site B (6).

In contrast, the application at site B specifies the key information (master key ID and G key ID (d3)) received from the application at site A and requests the key management system 10 to decrypt the data key (7). As described above, the G key ID (d3) in the key information is an extended part from the existing interface. At this time, the key management system 10 executes an application authentication process, based on the access policy, and the like which are input when the master key is created.

The key management system 10 obtains the G key shared with the region to which the application of site A belongs (in this case, in the same region) from the QKD system by, for example, the key provision API compliant with ETSI GS QKD 014 (8). The key management system 10 transmits the obtained G key to the application of site B as the data key (9). The application of site B decrypts the encryption data using the G key supplied from the key management system 10 (10).

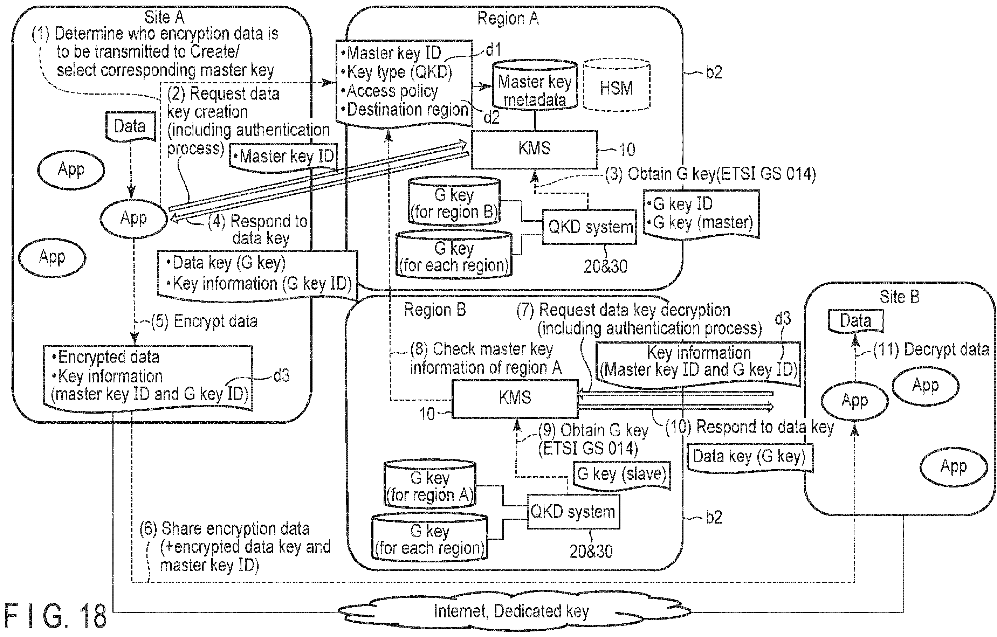

FIG. 18 shows a third use case of the platform system 1 of the embodiment. The third use case is a case where the applications at site A and site B obtain the quantum keys shared by the key management system 10 from different regions b2 (region A and region B), respectively.

The application at site A determines to whom the encryption data is to be transmitted, and requests the key management system 10 in region A to create a master key corresponding to the partner (1). Alternatively, when the master key has already been created, the application at site A selects the master key corresponding to the partner. When creating the master key, the application at site A inputs the key type (d1), the access policy, the destination region (d2), and the like. As described above, the key type (d1) and the destination region (d2) are extended parts from the existing interface.

When creating or selecting the master key corresponding to the partner to whom the encryption data is to be transmitted, the application at site A specifies the master key ID and requests the key management system 10 at site A to create a data key (2). At this time, the key management system 10 at site A executes an application authentication process, based on the access policy, and the like which are input when the master key is created.

The key management system 10 in region A obtains the G key shared with the destination region (region B) from the QKD system (quantum key circulation system 20 and quantum key distribution system 30) by, for example, the key provision API compliant with ETSI GS QKD 014 (3). The key management system 10 in region A transmits the G key and the G key ID to the application at site A, using the obtained G key as the data key and using its G key ID as key information (4).

The application at site A encrypts the data using the G key supplied from the key management system 10 in region A and obtains the encrypted data, and the key information including the master key ID and the G key ID (d3) (5). As described above, the G key ID (d3) in the key information is an extended part from the existing interface. The application at site A transmits the encryption data (encrypted data), the encrypted data key (G key ID), and the master key ID to the application at site B, and shares them with the application at site B (6).

In contrast, the application at site B specifies the key information (master key ID and G key ID (d3)) received from the application at site A and requests the key management system 10 of region B to decrypt the data key (7). As described above, the G key ID (d3) in the key information is an extended part from the existing interface. At this time, the key management system 10 in region B checks the master key information managed by the key management system 10 in region A (8), and performs the application authentication process at site B, based on the access policy, and the like.

The key management system 10 in region B obtains the G key shared with the region (region A) to which the application at site A belongs, from the QKD system by, for example, the key provision API compliant with ETSI GS QKD 014 (9). The key management system 10 in region B transmits the obtained G key to the application of site B as the data key (10). The application of site B decrypts the encryption data using the G key supplied from the key management system 10 (11).

As clarified in FIG. 17 and FIG. 18, in the platform system 1 of the embodiment, even if both the users executing the quantum cryptographic communication obtain the encryption keys from the same region or obtain the encryption keys from different regions, the uses can obtain the quantum keys by the same procedure (interface). In addition, since the platform system 1 employs the extended interface that conforms to the existing interface, the system enables the users to obtain the quantum keys in the same manner as the encryption key management service of the existing non-quantum keys, and can make it unnecessary to have, for example, the key provision API compliant with ETSI GS QKD 014.

In other words, the platform system 1 of the embodiment can provide the quantum cryptographic communication service including providing the quantum keys on the cloud system.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made. The accompanying claims and their equivalents are intended to cover such forms or modifications as would fall within the scope of the inventions.

The scope of protection is defined by the claims.

### Reference Signs List

1 ... platform system, 10 ... key management system (KMS), 20 ... quantum key circulation system, 30 ... quantum key distribution system, 100 ... data center.

## Claims

1. A cloud key management service platform system (1)
adapted to provide, on a cloud system providing various services including a cloud key management service for managing an encryption key which is a non-quantum key, a quantum cryptographic communication service including providing a quantum key by an extended interface conforming to an interface of the cloud key management service, wherein
the cloud system includes a plurality of data centers (100) serving as locations for providing the quantum cryptographic communication service, and sets a plurality of service areas each formed of one or more data centers, by the plurality of data centers,
each of the plurality of data centers comprises:
a quantum key distribution system (30) adapted to generate a Q key that is a quantum key for quantum cryptographic communication with the other data center directly connected, and share the Q key with the other data center;
a quantum key circulation system (20) adapted to transmit and receive a G key that is a quantum key to be provided to a user executing the quantum cryptographic communication, by the quantum cryptographic communication using the Q key with the other data center; and
a key management system (10) adapted to manage the G key in units of service areas,
the key management system being adapted to accept a request for
the G key from the user by the extended interface, and
provide the user with the G key obtained from the quantum key circulation system by key provision application programming interface (API) for quantum key, and **characterized in that**
each data center in a first service area is adapted to cooperate with the other data center in the first service area to
generate a first G key for a user in the first service area executing the quantum cryptographic communication with the other user in the first service area or cooperates with the other data centers in the first service area and a second service area different from the first area to generate a second G key for a user in the first service area executing the quantum cryptographic communication with the other user in the second service area, and
provide both users executing the quantum cryptographic communication between any two points in the plurality of service areas with the first G key or the second G key shared between the two points, by the extended interface.

2. The cloud key management service platform system of claim 1, wherein
each data center in the first service area is adapted to cooperate with the other data center in the first service area to execute replication of the first G key and the second G key in the first service area.

3. The cloud key management service platform system of one of claims 1 and 2, wherein
an interface of the cloud key management service is an interface for envelope encryption including designation of a master key, and at least a service area of a communication destination is added to the extended interface as attribute information of the master key.

4. The cloud key management service platform system of claim 3, wherein
in the extended interface, the G key is applied as a data key in the envelope encryption, and an identifier of the G key is applied as key information.

5. The cloud key management service platform system of one of claims 1 to 4, wherein
key provision API for the quantum key is key provision API compliant with ETSI GS QKD 014.

## Patentansprüche

1. Cloud-Schlüsselverwaltungsdienstplattformsystem (1), das so angepasst ist, dass es auf einem Cloud-System, das verschiedene Dienste bereitstellt, die einen Cloud-Schlüsselverwaltungsdienst zur Verwaltung eines Verschlüsselungsschlüssels, der ein nicht-quantenbasierter Schlüssel ist, einschließen, einen quantenkryptografischen Kommunikationsdienst bereitstellt, der Bereitstellen eines Quantenschlüssels über eine erweiterte Schnittstelle, die einer Schnittstelle des Cloud-Schlüsselverwaltungsdienstes entspricht, einschließt, wobei
das Cloud-System eine Vielzahl von Rechenzentren (100) einschließt, die als Standorte zur Bereitstellung des quantenkryptografischen Kommunikationsdienstes dienen, und eine Vielzahl von Dienstbereichen festlegt, die jeweils aus einem oder mehreren Rechenzentren durch die Vielzahl von Rechenzentren gebildet sind,
wobei jedes der Vielzahl von Rechenzentren Folgendes umfasst:
ein Quantenschlüsselverteilungssystem (30), das so angepasst ist, dass es einen Quantenschlüssel erzeugt, der ein Quantenschlüssel für kryptografische Quantenkommunikation mit dem anderen direkt verbundenen Rechenzentrum ist, und den Quantenschlüssel mit dem anderen Rechenzentrum teilt;
ein Quantenschlüsselzirkulationssystem (20), das so angepasst ist, dass es einen G-Schlüssel, der ein Quantenschlüssel ist, der einem Benutzer zum Ausführen der quantenkryptographischen Kommunikation bereitgestellt werden soll, durch die quantenkryptographische Kommunikation mit dem anderen Rechenzentrum unter Verwendung des Q-Schlüssels überträgt und empfängt; und
ein Schlüsselverwaltungssystem (10), das so angepasst ist, dass es den G-Schlüssel in Einheiten von Dienstbereichen verwaltet, wobei das Schlüsselverwaltungssystem so angepasst ist, dass es eine Anfrage des Benutzers nach dem G-Schlüssel über die erweiterte Schnittstelle annimmt und dem Benutzer den vom Quantenschlüsselzirkulationssystem erhaltenen G-Schlüssel durch die Programmierschnittstelle (API) der Schlüsselbereitstellungsanwendung für Quantenschlüssel bereitstellt, und **dadurch gekennzeichnet, dass**
jedes Rechenzentrum in einem ersten Dienstbereich so angepasst ist, dass es mit dem anderen Rechenzentrum im ersten Dienstbereich zusammenarbeitet, um einen ersten G-Schlüssel für einen Benutzer im ersten Dienstbereich zu erzeugen, der die quantenkryptografische Kommunikation mit dem anderen Benutzer im ersten Dienstbereich ausführt, oder mit dem anderen Rechenzentrum im ersten Dienstbereich und einem zweiten Dienstbereich, der vom ersten Dienstbereich unterschiedlich ist, zusammenarbeitet, um einen zweiten G-Schlüssel für einen Benutzer im ersten Dienstbereich zu erzeugen, der die quantenkryptografische Kommunikation mit dem anderen Benutzer im zweiten Dienstbereich ausführt, und
beiden Benutzern, die quantenkryptografische Kommunikation zwischen zwei beliebigen Punkten in der Vielzahl von Dienstbereichen mit dem ersten G-Schlüssel oder dem zweiten G-Schlüssel, der zwischen den beiden Punkten geteilt wird, durchführen, über die erweiterte Schnittstelle bereitstellt.

2. Cloud-Schlüsselverwaltungsdienstplattformsystem nach Anspruch 1, wobei
jedes Rechenzentrum im ersten Dienstbereich so angepasst ist, dass es mit dem anderen Rechenzentrum im ersten Dienstbereich zusammenarbeitet, um Replikation des ersten G-Schlüssels und des zweiten G-Schlüssels im ersten Dienstbereich auszuführen.

3. Cloud-Schlüsselverwaltungsdienstplattformsystem nach einem der Ansprüche 1 und 2, wobei
eine Schnittstelle des Cloud-Schlüsselverwaltungsdienstes eine Schnittstelle für Umschlagverschlüsselung ist, die Benennung eines Master-Schlüssels einschließt, und wobei mindestens ein Dienstbereich eines Kommunikationsziels der erweiterten Schnittstelle als Attributinformation des Master-Schlüssels hinzugefügt wird.

4. Cloud-Schlüsselverwaltungsdienstplattformsystem nach Anspruch 3, wobei
in der erweiterten Schnittstelle der G-Schlüssel als Datenschlüssel bei der Umschlagverschlüsselung angewendet wird und eine Kennung des G-Schlüssels als Schlüsselinformation angewendet wird.

5. Cloud-Schlüsselverwaltungsdienstplattformsystem nach einem der Ansprüche 1 bis 4, wobei
die API der Schlüsselbereitstellung für den Quantenschlüssel ETSI GS QKD 014 erfüllt.

## Revendications

1. Système de plateforme de services de gestion de clés cloud (1) adapté pour fournir, sur un système cloud offrant divers services, incluant un service de gestion de clés cloud pour la gestion d'une clé de chiffrement non quantique, un service de communication cryptographique quantique incluant la fourniture d'une clé quantique par une interface étendue conforme à une interface du service de gestion de clés cloud, dans lequel
le système cloud inclut une pluralité de centres de données (100) servant de lieux pour fournir le service de communication cryptographique quantique, et définit une pluralité de zones de service chacune formée d'un ou plusieurs centres de données, par la pluralité de centres de données,
chacun des centres de données comprend :
un système de distribution de clés quantiques (30) adapté pour générer une clé Q qui est une clé quantique pour la communication cryptographique quantique avec l'autre centre de données directement connecté, et partager la clé Q avec l'autre centre de données ;
un système de circulation de clés quantiques (20) adapté pour transmettre et recevoir une clé G qui est une clé quantique à fournir à un utilisateur exécutant la communication cryptographique quantique, par la communication cryptographique quantique utilisant la clé Q avec l'autre centre de données ; et
un système de gestion de clés (10) adapté à la gestion de la clé G dans des unités de zones de service, ce système de gestion de clé étant conçu pour accepter une demande de clé G de l'utilisateur via l'interface étendue et lui fournir la clé G obtenue du système de circulation de clés quantiques par le biais d'une interface de programmation d'application (API) de fourniture de clés pour clés quantiques, et **caractérisé en ce que**
chaque centre de données d'une première zone de service est configuré pour coopérer avec les autres centres de données de cette même zone afin de générer une première clé G pour un utilisateur de la première zone de service effectuant une communication cryptographique quantique avec un autre utilisateur de la même zone, ou pour coopérer avec les autres centres de données de la première zone de service et d'une deuxième zone de service différente de la première afin de générer une deuxième clé G pour un utilisateur de la première zone de service effectuant une communication cryptographique quantique avec un autre utilisateur de la deuxième zone de service, et
la fourniture aux deux utilisateurs exécutant la communication cryptographique quantique entre deux points quelconques dans la pluralité des zones de service, de la première clé G ou de la deuxième clé G partagée entre les deux points, par l'interface étendue.

2. Système de plateforme de service de gestion de clés cloud selon la revendication 1, dans lequel
chaque centre de données de la première zone de service est adapté pour coopérer avec l'autre centre de données de la première zone de service afin d'exécuter la réplication de la première clé G et de la deuxième clé G dans la première zone de service.

3. Système de plateforme de service de gestion de clés cloud selon l'une des revendications 1 et 2, dans lequel
une interface du service de gestion des clés cloud est une interface de chiffrement d'enveloppe incluant la désignation d'une clé principale, et au moins une zone de service d'une destination de communication est ajoutée à l'interface étendue en tant qu'information d'attribut de la clé principale.

4. Système de plateforme de service de gestion de clés cloud selon la revendication 3, dans lequel
dans l'interface étendue, la clé G est utilisée comme clé de données dans le chiffrement de l'enveloppe, et un identifiant de la clé G est utilisé comme information clé.

5. Système de plateforme de service de gestion de clés cloud selon l'une des revendications 1 à 4, dans lequel
l'API de fourniture de clés pour la clé quantique est une API de fourniture de clés conforme à la norme ETSI GS QKD 014.
